(19) Europäisches Patentamt
European Patent Office
Office européen des brevets

(11) **EP 2 966 802 A1**

(12) **EUROPEAN PATENT APPLICATION**

(43) Date of publication:
**13.01.2016 Bulletin 2016/02**

(51) Int Cl.:
*H04L 9/08* $^{(2006.01)}$     *H04L 9/30* $^{(2006.01)}$

(21) Application number: **14306108.3**

(22) Date of filing: **07.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Joye, Marc**
  **35576 Cesson Sevigne (FR)**
• **Libert, Benoit**
  **35576 Cesson Sevigne (FR)**

(74) Representative: **Huchet, Anne**
**Technicolor**
**1-5 rue Jeanne d'Arc**
**92130 Issy-Les-Moulineaux (FR)**

(54) **Method for ciphering and deciphering digital data, based on an identity, in a multi-authorities context**

(57)    In one embodiment, it is proposed a for ciphering digital data M being an element of a group $\mathbb{G}_T$, said group $\mathbb{G}_T$ being part of a bilinear group $(\mathbb{G}, \widehat{\mathbb{G}}, \mathbb{G}_T)$ of prime order *p*. The method can be executed by an electronic device, and is remarkable in that it comprises:
- applying a hash function to an identity associated to a recipient electronic device, delivering *K* + 1 elements, each element belonging to said group $\widehat{\mathbb{G}}$, and *K* being an integer value greater than or equal to one;
- obtaining from common public parameters, shared by *n* trusted authorities servers, n being an integer value greater or equal to two, 2*K* generators of said group $\mathbb{G}$;
- obtaining *K* random element(s) belonging to $\mathbb{Z}_p$;
- determining *K* + 1 elements belonging to said group $\mathbb{G}$ via exponentiations of combinations of generators from said 2*K* generators, with exponents being said *K* random element(s), said *K* + 1 elements being a first part of a ciphertext of said digital data M;
- determining a product of said digital data M with *K* + 1 elements belonging to said group $\mathbb{G}_T$, each of said *K* + 1 elements belonging to said group $\mathbb{G}_T$ being obtained via applying a pairing function on a combination of elements of a master public key associated to one of the n trusted authorities, said *K* random element(s) and output of said applying a hash function, delivering a second part of said ciphertext of said digital data M.

**Description**

Field of the disclosure

One embodiment of the disclosure relates to cryptography, and more specifically, to identity-based encryption, where any easy-to-remember identifier (such as a phone number) can serve as a public key in order to alleviate the need for digital certificates.

Background of the disclosure

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Identity-based encryption (or IBE, which is a widespread acronym) allows a sender to encrypt a message to a receiver using only the receiver's identity and a set of master public parameters publicized by a trusted authority (or TA), which is an electronic device that is supposed to be secure. For systems involving a number $n \geq 1$ of independent trusted authorities, it is known that any IBE scheme which is secure in the single authority setting is also secure in the multi-authority setting. Indeed, in the article "Security and Anonymity of Identity-Based Encryption with Multiple Trusted Authorities", by K. Paterson et al., published in the proceedings of the conference Pairing 2008, it was shown that, if an IBE system is secure and receiver-anonymous in the single authority setting, it is also secure and receiver anonymous in the multi-authority setting (where n > 1).

However, the security bound in the random oracle model is linearly affected by the number $n$ of distinct trusted authorities in a multi-TA setting. With the generic result of the previous mentioned article, the number $n$ of trusted authorities tends to linearly affect the security bound: if an adversary has advantage at most $Adv_1$ in the single authority setting, its advantage function can only be bounded by $Adv_n \leq n.Adv_1$ in an environment with n trusted authorities. The reason is that, in the security proof, the reduction has to guess upfront (with probability $1/n$) the trusted authority for which the adversary will ask the challenger to generate the challenge ciphertext.

So far, no IBE scheme that simultaneously provides semantic security, anonymity and TA-anonymity with security bounds that are independent of n is known.

Therefore, there is a need to find out an IBE scheme with a tighter security proof (in the random oracle model) in the multi-authority setting, which is also independent of the number $n$. Indeed, obtaining a tighter security is interesting due to the fact that it has an impact on the size of the parameters: it enables a device to select smaller parameters which in turn improves the efficiency of the scheme.

One goal of one embodiment of the disclosure is to propose an IBE scheme that provides both semantic security and receiver anonymity, with a security reduction that does not depend on the number n of trusted authorities in the system. More precisely, one goal of one embodiment of the disclosure is to provide an IBE scheme for which the reduction does not depend on the number $n$ of distinct trusted authorities in the system, and to provide an IBE scheme that does not only hide the encrypted message, but also the receiver's identity and the trusted authority under which the ciphertext was generated.

Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure is directed to a method for ciphering digital data M being an element of a group $G_T$, said group $G_T$ being part of a bilinear group $(G, \hat{G}, G_T)$ of prime order $p$, the method being executed by an electronic device. The method is remarkable in that it comprises:

-   applying a hash function to an identity associated to a recipient electronic device, delivering $K + 1$ elements, each element belonging to said group $\hat{G}$, and $K$ being an integer value greater than or equal to one;
-   obtaining from common public parameters, shared by $n$ trusted authorities servers, $n$ being an integer value greater or equal to two, $2K$ generators of said group G;

- obtaining K random element(s) belonging to $Z_p$;
- determining K + 1 elements belonging to said group G via exponentiations of combinations of generators from said 2K generators, with exponents being said K random element(s), said K + 1 elements being a first part of a ciphertext of said digital data M;
- determining a product of said digital data $M$ with $K$ + 1 elements belonging to said group $G_T$, each of said $K$ + 1 elements belonging to said group $G_T$ being obtained via applying a pairing function on a combination of elements of a master public key associated to one of the $n$ trusted authorities, said $K$ random element(s) and output of said applying a hash function, delivering a second part of said ciphertext of said digital data $M$.

In a preferred embodiment, the method for ciphering is remarkable in that said master public key comprises $K(K + 1)$ elements belonging to said group G, said $K(K + 1)$ elements being derived from said 2K generators.

In a preferred embodiment, the method for ciphering is remarkable in that said integer value K is equal to one.

In a preferred embodiment, the method for ciphering is remarkable in that said first part of said ciphertext of said digital data M is $(C_z, C_r) = (g_z{}^\theta, g_r{}^\theta)$ with $g_z$ and $g_r$ being said 2 generators of said group G, and $\theta$ is said one random element belonging to $Z_p$.

In a preferred embodiment, the method for ciphering is remarkable in that said second part of said ciphertext of said digital data $M$ is $M. \prod_{j=1}^{2} e\left(g_j{}^\theta, H_j\right)$, where $H_1$ and $H_2$ correspond to an output of applying a hash function, $g_1$, $g_2$ correspond to said master public key, defined as follows $g_j = g_z{}^{\chi j} \cdot g_r{}^{\gamma j}$, with $j$ being equal to 1 or 2, $\chi_j$ and $\gamma_j$ being random elements belonging to $Z_p$ defining a master secret key, and e corresponds to said pairing function.

In another embodiment, the method for ciphering is remarkable in that said integer value K is equal to two.

In a preferred embodiment, such method for ciphering is remarkable in that said first part of said ciphertext of said digital data $M$ is $(C_r, C_u, C_z) = (g_r{}^{\theta 1}, h_u{}^{\theta 2}, g_z{}^{\theta 1} \cdot h_z{}^{\theta 2})$ with $g_r$, $g_z$, $h_u$ and $h_z$ being said 4 generators of said group G, and $\theta_1$, $\theta_2$ are said two random elements belonging to $Z_p$.

In a preferred embodiment, such method for ciphering is remarkable in that said second part of said ciphertext of said digital data $M$ is $M. \prod_{j=1}^{3} e\left(g_j{}^{\theta_1}. h_j{}^{\theta_2}, H_j\right)$, where $H_1$, $H_2$ and $H_3$ correspond to an output of applying a hash function, $\left\{\left(g_j, h_j\right)\right\}_{j=1}^{3}$ correspond to said master public key, defined as follows $g_j = g_z{}^{\chi j} \cdot g_r{}^{\gamma j}$, and $h_j = h_z{}^{\chi j}. h_u{}^{\delta j}$ with $j$ being equal to 1 or 2, $\chi_j$, $\gamma_j$ and $\delta_j$ being random elements belonging to $Z_p$ defining a master secret key, and $e$ corresponds to said pairing function.

In another embodiment, it is proposed a method for deciphering a ciphertext, said ciphertext comprising a first part and a second part. Such method for deciphering can be executed on an electronic device, and is remarkable in that it comprises:

- obtaining a bilinear group (G, $\hat{G}$, $G_T$) of prime order $p$;
- obtaining a private key associated to an identity , said private key being a linearly homomorphic signature of a hash of said identity, and said private key comprising $K$ + 1 elements of said group G, with $K$ being an integer value greater than or equal to one;
- determining a product of said second part of said ciphertext with $K$ + 1 elements belonging to said group $G_T$, each element of said $K$ + 1 elements belonging to said group $G_T$ being obtained via applying a pairing function on a combination of elements of said first part of said ciphertext with elements of said private key associated to said identity, said determining delivering deciphered digital data $M$.

In a preferred embodiment, the method for deciphering is remarkable in that each element of said private key associated to said identity is equal to $\prod_{j=1}^{K+1} H_j{}^{-u_j}$, where elements $H_1, ..., H_{K+1}$ being an output of a hash function applied to said identity, and elements $u_j$ being random elements belonging to $Z_p$.

In a preferred embodiment, the method for deciphering is remarkable in that said integer value K is equal to one.

In a preferred embodiment, the method for deciphering is remarkable in that said private key is $d_{ID} = (z_{ID}, r_{ID}) = (\prod_{j=1}^{2} H_j{}^{-\chi_j}, \prod_{j=1}^{2} H_j{}^{-\gamma_j})$, with $\chi_j$ and $\gamma_j$ being random elements belonging to $Z_p$.

In a preferred embodiment, the method for deciphering is remarkable in that said determining a product corresponds to obtaining $D.e(C_z, z_{ID}).e(C_r, r_{ID})$ where the couple $(C_z, C_r)$ is said first part of said ciphertext, and $D$ is said second part of said ciphertext.

In another embodiment, the method for deciphering is remarkable in that said integer value K is equal to two.

In a preferred embodiment, such method for deciphering is remarkable in that said private key is

$$d_{ID} = (z_{ID}, r_{ID}, u_{ID}) = \left(\prod_{j=1}^{3} H_j^{-\chi_j}, \prod_{j=1}^{3} H_j^{-\gamma_j}, \prod_{j=1}^{3} H_j^{-\delta_j}\right),$$ with $\chi_j$, $\gamma_j$ and $\delta_j$ being random elements belonging to $Z_p$.

In a preferred embodiment, such method for deciphering is remarkable in that said determining a product corresponds to obtaining $D.e(C_r, r_{ID}).e(C_u, u_{ID}).e(C_z, z_{ID})$ where the triplet $(C_r, C_u, C_z)$ is said first part of said ciphertext, and $D$ is said second part of said ciphertext.

It should also be noticed that the results described in the article "Building Key-Private Public-Key Encryption Schemes", by K.G. Paterson et al., published in the proceedings of the conference ACISP 2009, can be applied to at least one embodiment of the disclosure in order to generically construct a chosen-ciphertext-secure key private public-key encryption scheme with a tighter security proof in the multi-user setting, contrary to the results of Bellare et al., in the article "Public-Key Encryption in a Multi-user Setting: Security Proofs and Improvements", published in the proceedings of the conference Eurocrypt 00, that only consider semantic security and chosen-ciphertext security. In particular, they do not provide a method for building receiver-anonymous (a.k.a. key-private) chosen ciphertext-secure public-key encryption schemes where the security reductions are not affected by the number of users in the system.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for "*Compact Disc - Read Only Memory*") or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

Let's also remark that a step of obtaining an element/value in the present document can be viewed either as a step of reading such element/value in a memory unit of an electronic device or a step of receiving such element/value from another electronic device via communication means.

In another embodiment, it is proposed an electronic device for ciphering digital data M being an element of a group $G_T$, said group $G_T$ being part of a bilinear group $(G, \hat{G}, G_T)$ of prime order $p$. The electronic device is remarkable in that it comprises:

- means for applying a hash function to an identity associated to a recipient electronic device, delivering $K + 1$ elements, each element belonging to said group $\hat{G}$, and $K$ being an integer value greater than or equal to one;

- means for obtaining from common public parameters, shared by $n$ trusted authorities servers, n being an integer value greater or equal to two, 2K generators of said group $\mathbb{G}$;
- means for obtaining $K$ random element(s) belonging to $Z_p$;
- means for determining $K + 1$ elements belonging to said group G via exponentiations of combinations of generators from said $2K$ generators, with exponents being said $K$ random element(s), said $K + 1$ elements being a first part of a ciphertext of said digital data $M$;
- means for determining a product of said digital data $M$ with $K + 1$ elements belonging to said group $G_T$, each of said $K + 1$ elements belonging to said group $G_T$ being obtained via applying a pairing function on a combination of elements of a master public key associated to one of the n trusted authorities, said $K$ random element(s) and output of said applying a hash function, delivering a second part of said ciphertext of said digital data $M$.

In another embodiment, it is proposed an electronic device for deciphering a ciphertext, said ciphertext comprising a first part and a second part, the electronic device being characterized in that it comprises:

- means for obtaining a bilinear group (G, $\hat{G}$, $G_T$) of prime order $p$;
- means for obtaining a private key associated to an identity , said private key being a linearly homomorphic signature of a hash of said identity, and said private key comprising $K + 1$ elements of said group G, with $K$ being an integer value greater than or equal to one;
- means for determining a product of said second part of said ciphertext with $K + 1$ elements belonging to said group $G_T$, each element of said $K + 1$ elements belonging to said group $G_T$ being obtained via applying a pairing function on a combination of elements of said first part of said ciphertext with elements of said private key associated to said identity, said determining delivering deciphered digital data $M$.

## Brief description of the figures

The above and other aspects of the disclosure will become more apparent by the following detailed description of exemplary embodiments thereof with reference to the attached drawings in which:

- Figure 1 discloses a flowchart which depicts some steps performed by an electronic device during a common setup generation process, according to one embodiment of the disclosure;
- Figure 2 discloses a flowchart which depicts some steps performed by an electronic device during a master key generation process, according to one embodiment of the disclosure;
- Figure 3 discloses a flowchart which depicts some steps performed by an electronic device during a private key generation process, according to one embodiment of the disclosure;
- Figure 4 discloses a flowchart which depicts some steps performed by an electronic device during an execution of a method of ciphering, according to one embodiment of the disclosure;
- Figure 5 discloses a flowchart which depicts some steps performed by an electronic device during an execution of a method of deciphering, according to one embodiment of the disclosure;
- Figure 6 discloses a flowchart which depicts some steps performed by an electronic device during a common setup generation process, according to one embodiment of the disclosure;
- Figure 7 discloses a flowchart which depicts some steps performed by an electronic device during a master key generation process, according to one embodiment of the disclosure;
- Figure 8 discloses a flowchart which depicts some steps performed by an electronic device during a private key generation process, according to one embodiment of the disclosure;
- Figure 9 discloses a flowchart which depicts some steps performed by an electronic device during an execution of a method of ciphering, according to one embodiment of the disclosure;
- Figure 10 discloses a flowchart which depicts some steps performed by an electronic device during an execution of a method of deciphering, according to one embodiment of the disclosure;
- Figure 11 presents a device that can be used to perform one or several steps of methods disclosed in the present document.

## Detailed description

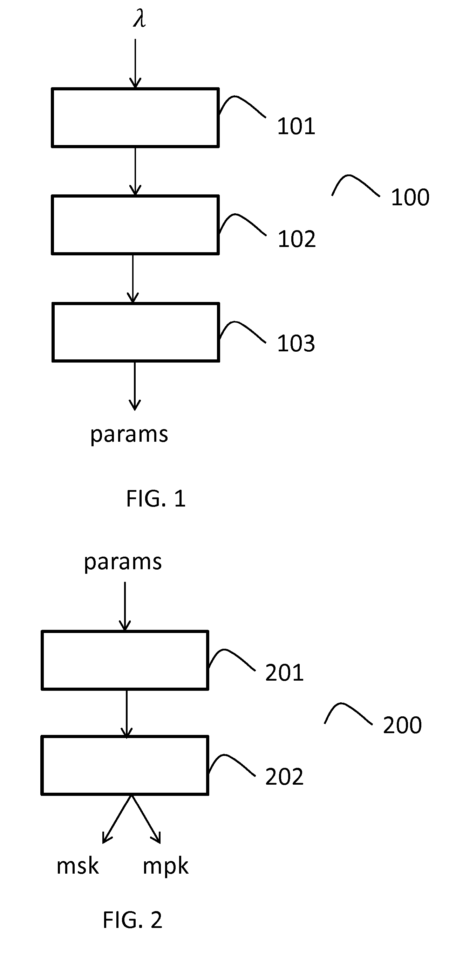

Figure 1 discloses a flowchart which depicts some steps performed by an electronic device during a common setup generation process, according to one embodiment of the disclosure.

More precisely, the common setup generation process, referenced 100, takes as input a security parameter $\lambda$

which corresponds to a bit-length.

In a step, referenced 101, the electronic device chooses or selects or obtains a bilinear group (G, $\hat{\text{G}}$, $G_T$) of prime order $p > 2^\lambda$, with a efficiently computable isomorphism $\psi: \hat{\text{G}} \to \text{G}$.

In a step referenced 102, the electronic device obtains (or chooses) several random generators from the group G (in this embodiment, the number of random generators is equal to four): $g_z, g_r, h_z, h_u \xleftarrow{R} \mathbb{G}$.

In a step referenced 103, the electronic device chooses an identifier associated to a hash function H: {0,1}* → $\hat{\text{G}}^3$, that is modeled as a random oracle in the security analysis. The plaintext space is $M := \text{G}_T$, and the ciphertext space is $CT := \text{G}^3 \times \text{G}_T$.

The electronic device then provides the common public parameters *params* to other electronic devices that either propagates it, or use it. The common public parameters *params* is defined as being *params* = ((G, $\hat{\text{G}}$, $G_T$), $\psi$, $g_z$, $g_z$, $g_r$, $h_u$, H, M, CT). It should be noted that the elements comprised in *params* can be transmitted either one by one in a sequentially way, or they can also be transmitted in a unique packet, or also they can be transmitted in parallel.

Figure 2 discloses a flowchart which depicts some steps performed by an electronic device during a master key generation process, according to one embodiment of the disclosure.

More precisely, the master key generation process, referenced 200, takes as input a common public parameters *params* as the one obtained via the execution of the process 100.

In a step, referenced 201, the electronic device obtains 9 elements belonging to the group $Z_p$. Indeed, for $j$ = 1 to 3, the electronic device obtains $\chi_j, \gamma_j, \delta_j \xleftarrow{R} \mathbb{Z}_p$. The master secret key is defined as $msk = \left\{(\chi_j, \gamma_j, \delta_j)\right\}_{j=1}^{3}$.

Then, in a step referenced 202, it determines $g_j = g_z^{\chi_j} \cdot g_r^{\gamma_j}$ and $h_j = h_z^{\chi_j} \cdot h_u^{\delta_j}$. The master public key associated to the master secret key corresponds to $mpk = \left\{(g_j, h_j)\right\}_{j=1}^{3}$.

Then, it outputs the master secret key *msk,* which is kept in a secure memory of an electronic device, and the master public key *mpk,* which is then transmitted to other electronic devices. As described below, the master secret key *msk* is used only to perform a private key generation from a public identifier (or an identity). However, the master public key *mpk* is used in all other processes (i.e. the key generation process, the encryption or ciphering process, and the decryption or deciphering process).

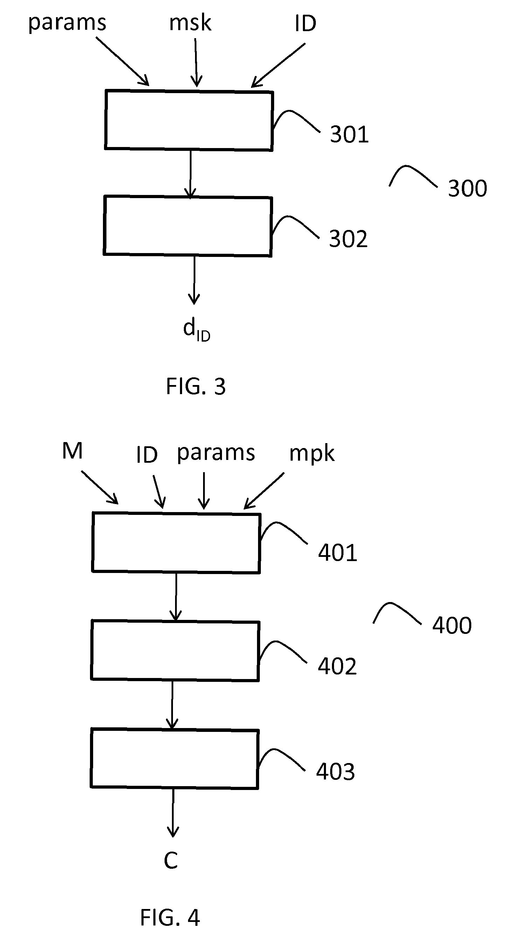

Figure 3 discloses a flowchart which depicts some steps performed by an electronic device during a private key generation process, according to one embodiment of the disclosure.

More precisely, the private key generation process, referenced 300, takes as input a common public parameters *params* as the one obtained via the execution of the process 100, and the master secret key *msk*, as the one obtained via the execution of the process 200.

In a step referenced 301, the electronic device, that could be a trusted authority (TA), determines from a given identity *ID,* a triple ($H_1$, $H_2$, $H_3$) = H(*ID*) ∈ $\hat{\text{G}}^3$. In another embodiment, the electronic device can obtain it from another electronic device.

Then, in a step referenced 302, the electronic device uses the components of the master secret key $msk = \left\{(\chi_j, \gamma_j, \delta_j)\right\}_{j=1}^{3}$ in order to determine a private key associated to the given identity *ID* as follows:

$$d_{ID} = (z_{ID}, r_{ID}, u_{ID}) = \left(\prod_{j=1}^{3} H_j^{-\chi_j}, \prod_{j=1}^{3} H_j^{-\gamma_j}, \prod_{j=1}^{3} H_j^{-\delta_j}\right).$$

The electronic device provides the determined secret key $d_{ID}$ to the electronic device associated to the given identity *ID,* enabling it to perform ciphering as detailed in the Figure 4.

Figure 4 discloses a flowchart which depicts some steps performed by an electronic device during an execution of a method of ciphering, according to one embodiment of the disclosure.

More precisely, the method of ciphering, referenced 400, takes as input a common public parameters *params* as the one obtained via the execution of the process 100, the master public key *mpk,* as the one obtained via the execution of the process 200, a message *M* to encrypt/cipher, and an identity *ID* (corresponding to the one of the receiver that is to decipher the output of the method of ciphering 400).

The electronic device obtains, in a step referenced 401, random elements $\theta_1, \theta_2$ belonging to the group $\mathbb{Z}_p : \theta_1, \theta_2 \xleftarrow{R} \mathbb{Z}_p$.

It also determines, in a step referenced 402, from the identity *ID* and the information related to the hash function *H* to be used, the value of H(*ID*) = ($H_1$, $H_2$, $H_3$) ∈ $\hat{\text{G}}^3$. Obviously, the order of execution of the steps 401 and 402 can be modified (and they can be done in parallel).

Then, in a step referenced 403, the electronic device performs several exponentiations and pairing computations in order to obtain:

- a triplet $(C_r, C_u, C_z) = (g_r{}^{\theta 1}, h_u{}^{\theta 2}, g_z{}^{\theta 1}. h_z{}^{\theta 2})$ that corresponds to a first part of the ciphertext $C$; and

- an element $D = M.\prod_{j=1}^{3} e(g_j{}^{\theta_1}. h_j{}^{\theta_2}, H_j)$ that corresponds to the second part of the ciphertext $C$.

Then, the ciphertext $C = (C_r, C_u, C_z, D)$ determined by the electronic device is transmitted.

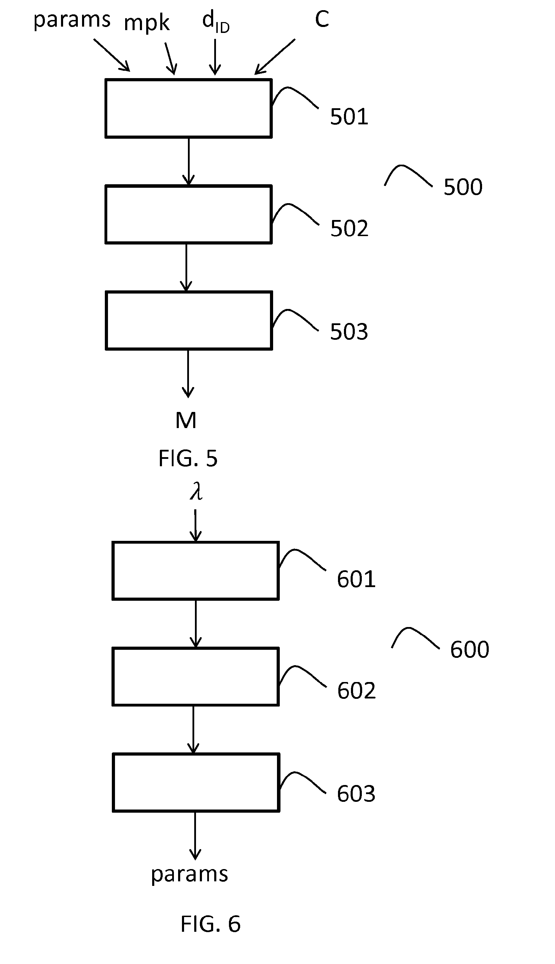

Figure 5 discloses a flowchart which depicts some steps performed by an electronic device during an execution of a method of deciphering, according to one embodiment of the disclosure.

More precisely, the method of deciphering, referenced 500, takes as input a common public parameters *params* as the one obtained via the execution of the process 100, the master public key *mpk,* as the one obtained via the execution of the process 200, a ciphertext $C$ to be decrypted, and a private key $d_{ID}$ associated to the given identity, as the one obtained via the execution of the process 300.

The electronic device parses, in a step referenced 501, the ciphertext $C$ to be decrypted in the same way as an expected ciphertext obtained via the execution of the method 400. Therefore we have $C = (C_r, C_u, C_z, D)$.

It also parses, in a step referenced 502, the private key $d_{ID}$ in the same way as an expected private key (or a decryption key) obtained via the execution of the method 300. Therefore we have $d_{ID} = (Z_{ID}, r_{ID}, u_{ID})$.

Then, the decrypted message $M$ is obtained, in a step referenced 503, by determining $D.e(C_r, r_{ID}).e(C_u, u_{ID}).e(C_z, z_{ID})$. Indeed, it is due to the fact that $M = D.e(C_r, r_{ID}).e(C_u, u_{ID}).e(C_z, z_{ID})$. The correctness can be verified by observing that for a decryption key $d_{ID} = (z_{ID}, r_{ID}, u_{ID})$ the two following relations are satisfied:

$$e(g_z, z_{ID}).\, e(g_r, r_{ID}) = \prod_{j=1}^{3} e(g_j, H_j)^{-1} \text{ and } e(h_z, z_{ID}).\, e(h_u, u_{ID}) = \prod_{j=1}^{3} e(h_j, H_j)^{-1}.$$ Then, by

raising these two equations to the powers $\theta_1$ and $\theta_2$ respectively, and if we multiply the two resulting equations, we have

$$e\left(g_z^{\theta_1}. h_z^{\theta_2}, z_{ID}\right).\, e\left(g_r^{\theta_1}, r_{ID}\right).\, e\left(h_u^{\theta_2}, u_{ID}\right) = \prod_{j=1}^{3} e\left(g_j^{\theta_1}. h_j^{\theta_2}, H_j\right)^{-1}, \text{ which explains why the decryption al-}$$

gorithm recovers the plaintext/message $M$.

The following scheme (comprising the methods of Figures 1 to 5) is provably secure in the random oracle model assuming the DLIN (for "*Decision Linear*") assumption holds as it is detailed in the following section. The security proof relies on the use of a sequence of games as explained in the article "Sequences of Games: A Tool for Taming Complexity in Security Proofs" by V. Shoup. The general case (with the use of $K > 3$) is linked to the $K$ - DLIN problem, which is a generalization of the linear problem, as explained in the article "A Cramer-Shoup Encryption Scheme from the Linear Assumption and from Progressively Weaker Linear Variants" by H. Shacham.

We can prove the following result, which shows that the exact security of the scheme does not depend on the number $n$ of authorities in the system. It can also be remarked that, as a consequence of this result, ciphertexts are computationally indistinguishable from a sequence of random group elements in $CT := G^3 \times G_T$. This implies that these ciphertexts computationally hide the message, the identity of the receiver and the specific master public key mpk under which they are generated.

For reminders, an IBE system (or scheme) is AI-secure in the multi-TA setting (or m-AI-ID-CPA secure) if no PPT (i.e. no polynomial) adversary $A$ has non-negligible advantage in this game:

    1. The challenger generates global parameters through a common setup generation process, that are given to an adversary $A$;

    2. The adversary $A$ chooses an integer n $\in$ *poly*($\lambda$). The challenger generates n master key pairs $\{(mpk_i, msk_i)\}_{i=1}^{n}$ by executing a master key generation process. Then, the master public keys are given to the adversary $A$. The challenger also initalizes empty sets $C_{TA} \leftarrow \phi$, and $L_i \leftarrow \varnothing$, for $i = 1$ to $n$, that will be used to keep track of corrupted TAs and corrupted identities for each TA;

    3. The adversary $A$ interleaves the following kinds of queries:

        a. **Corruption queries:** $A$ specifies an index $i \in \{1, ..., n\}$. The challenger returns the master secret key $msk_i$ of the $i$-th TA and sets $C_{TA} := C_{TA} \cup \{i\}$;

        b. **Private key queries:** $A$ chooses a pair $(ID, i)$, where $i \in \{1, ..., n\}$, and $ID$ is an identity of $A$' s choice. The challenger responds with a private key $d_{ID}$ generated through a private key generation process for identity $ID$, and sets $L_i \leftarrow L_i \cup \{ID\}$.

4. When the adversary $A$ decides that phase 3 is over, it chooses a message $M^*$, an identity $ID^*$ and an index $i^* \in$ $\{1, ..., n\}$, such that $i^* \notin C_{TA}$ and $ID^* \notin \mathcal{L}_{i^*}$. The challenger flips a coin $d \overset{R}{\leftarrow} \{0,1\}$ and responds as follows.

If $d = 0$, the challenger computes challenge ciphertext $C^*$, which is the output of the encryption process that takes into input the message $M^*$, $mpk_i^*$, $ID^*$, and the global parameters. If $d = 1$, it returns a uniformly random element belonging to the ciphertext space, which is uncorrelated to $mpk_i^*$, $ID^*$ or $M^*$;

5. The adversary $A$ issues new queries as in stage 3. At the end of stage 5, it is required that $i^* \notin C_{TA}$ and $ID^* \notin L_i^*$;

6. The adversary $A$ outputs a bit $d' \in \{0,1\}$ and wins if $d = d'$. Adversary $A$'s advantage is defined as the distance

$$\boldsymbol{Adv}^{m-AI-ID-CPA}(\mathcal{A}) := |\Pr[d' = 1 \mid d = 1] - \Pr[d' = 1 \mid d = 0]| = |2.\Pr[d' = d] - 1|$$

The above definition captures that ciphertexts should be indistinguishable from random elements of the ciphertext space, which is common to all authorities. As a result, ciphertexts computationally hide the identity of the receiver (and thus provide key-privacy in the identity-based setting) and the specific master public key that was used to create them.

The property of hiding the trusted authority (TA) that the receiver depends on is called TA anonymity in the article "Building Key-Private Public-Key Encryption Schemes", by K. Paterson, and published in the proceedings of the conference ACISP 2009. It was proved in this article that any TA-anonymous IBE scheme implies a keyprivate public-key encryption scheme which is secure against chosen-ciphertext attacks.

The idea of this article was simply to apply the Canetti-Halevi-Katz transformation (described in the article "*Chosen-Ciphertext Security from Identity-Based Encryption*" by R. Canetti et al., and published in the proceedings of the conference Eurocrypt 2004) to the underlying TA-anonymous IBE. As a consequence, any IBE scheme satisfying the above definition implies a chosen-ciphertext-secure key-private public-key encryption scheme.

The following theorem can be stated: the scheme disclosed in Figures 1 to 5 provides $m$ AI-ID-CPA security in the random oracle model if the DLIN assumption holds in $\hat{G}$. Concretely, for any $m$ -AI-ID-CPA adversary $A$, there exists a DLIN distinguiher $B$ such that

$\boldsymbol{Adv}^{m-AI-ID-CPA}(A) \leq 3. e. (q + 1). \boldsymbol{Adv}^{DLIN}(B)$, where e is the base for the natural logarithm and q is the maximal number of private key queries per authority.

The proof of such statement can be done via the following sequence of games, which starts with a game where the challenger's hidden bit is $d = 0$ and ends with a game where d = 1. In each game $i$, $S_i$ denotes the event that the challenger outputs $d' = 1$.

**Game 0:** This is the real game captured by Definition 2. Throughout the game, all random oracle queries are answered by returning a uniformly random value in the appropriate range. Of course, the adversary $A$ consistently receives the same answer when a given query is made more than once. When $A$ chooses to corrupt some authority $i \in$ $\{1,...,n\}$, the challenger $B$ hands over the master secret key $msk_i = \left\{(\chi_{i,j}, \gamma_{i,j}, \delta_{i,j})\right\}_{j=1}^{3}$. At each private key query, the challenger computes a tuple of the form $d_{ID} = (Z_{ID}, r_{ID}, u_{ID})$ as specified by the process 300. To answer such a query, the challenger invokes the random oracle $H$ for itself in order to define the hash value $H(ID) \in \hat{G}^3$ if it has not been defined yet. At the end of the game, the adversary outputs a bit $d' \in \{0,1\}$ and the challenger outputs 1if $d' = 0$. The latter event is noted $S_0$.

**Game 1:** In this game, the generation of the challenge ciphertext is modified $C^* = \left(C_r^*, C_u^*, C_z^*, D^*\right)$. The modification is that $D^*$ is computed using the private key, instead of the encryption exponents $\theta_1^*, \theta_2^* \in \mathbb{Z}_p$. Specifically, when the adversary announces its target $(i^*, ID^*)$ in the challenge phase, the challenger first computes $(H_1^*, H_2^*, H_3^*)$ = $H(ID^*)$ and the private key $d_{ID^*} = (z_{ID^*}, r_{ID^*}, u_{ID^*}) = \left(\prod_{j=1}^{3} H_j^{*-\chi_{i^*,j}}, \prod_{j=1}^{3} H_j^{*-\gamma_{i^*,j}}, \prod_{j=1}^{3} H_j^{*-\delta_{i^*,j}}\right)$, before computing: $C_r^* = g_r^{\theta_1^*}, C_u^* = h_u^{\theta_2^*}, C_z^* = g_z^{\theta_1^*}. h_z^{\theta_2^*}$, with $\theta_1^*, \theta_2^* \overset{R}{\leftarrow} \mathbb{Z}_p$, as well as $D^* = M. e(C_r^*, r_{ID^*})^{-1}. e(C_u^*, u_{ID^*})^{-1}. e(C_z^*, z_{ID^*})^{-1}$.

The ciphertext $C^* = \left(C_r^*, C_u^*, C_z^*, D^*\right)$ is then returned to the adversary $A$. It is easy to see that this change is only conceptual since the challenge $C^*$ has the same distribution as previously. Consequently, $\Pr[S_1] = P_R[S_0]$.

**Game 2:** This game is identical to Game 1 with the following difference. For each random oracle query $H(ID)$, the challenger $B$ flips a biased coin $v_{ID} \in \{0,1\}$ that takes the value 1 with probability$1/(q + 1)$ and the value 0 with probability $q/(q + 1)$. At the end of the game, $B$ considers the event $E$ that either of the following conditions holds:

- For the target authority-identity pair $(i^*, ID^*)$, the coin $v_{ID}^*$ flipped for the hash query $H(ID^*)$ was $v_{ID}^* = 0$;
- There exists an identity $ID \neq ID^*$, suct that a private key query $(i^*, ID)$ was made for the target authority $i^* \in \{1, ..., n\}$ but for which $v_{ID} = 1$.

If event $E$ occurs (which $B$ can detect at the end of the game), $B$ halts and declares failure. Otherwise, it outputs 1 if and only if the adversary outputs $d = 0$. The same analysis as that of Coron (in the article "On the Exact Security of Full Domain Hash", published in the proceedings of the conference CRYPTO 2000) shows that $\Pr[\neg E] = 1/e(q + 1)$, where $e$ is the base for the natural logarithm. The transition from Game 1 to Game 2 is thus a transition based on a failure event of large probability, as noticed in the article "A Note On Game-Hopping Proofs", by A. Dent, published in the Cryptology ePrint Archive: Report 2006/260, and we thus have $\Pr[S_2] = \Pr[S_1] \cdot \Pr[\neg E] = \Pr[S_1] \cdot 1/e(q + 1)$.

**Game 3:** In this game, we modify the treatment of random oracle queries. At the outset of the game, the challenger $B$ picks random group elements $\hat{g}, \hat{f}, \hat{h} \xleftarrow{R} \widehat{\mathbb{G}}^3$. Then, at each $H$- query involving an identity $ID, B$ responds as follows:

- If $v_{ID} = 0$, the challenger $B$ defines $H(ID) = (H_1, H_2, H_3) \in \hat{G}^3$ as a vector living in the two dimensional space spanned by the vectors $(\hat{f}, 1, \hat{g})$ and $(1, \hat{h}, \hat{g})$. Namely, it returns $(H_1, H_2, H_3) = (\hat{f}^{\alpha_{ID}}, \hat{h}^{\beta_{ID}}, \hat{g}^{\alpha_{ID}+\beta_{ID}})$, for randomly chosen $\alpha_{ID}, \beta_{ID} \xleftarrow{R} \mathbb{Z}_p$;
- If $v_{ID} = 1$, then $H(ID)$ is defined to be a random vector of $\hat{G}^3$ as previously.

It is easy to prove that, although $H$ no longer behaves as an actual random oracle over $\hat{G}^3$, this should be hardly noticeable to $A$ if the DLIN assumption holds in $\hat{G}$. As showed by Lemma 1, there exists an efficient algorithm $B_1$ such that $|\Pr[S_3] - \Pr[S_2]| \leq \textbf{Adv}^{DLIN}(B)$.

**Game 4:** In this game, we bring another modification to the generation of the challenge ciphertext $C^* = (C_r^*, C_u^*, C_z^*, D^*)$. Instead of drawing the triple $(C_r^*, C_u^*, C_z^*) = (g_r^{\theta_1^*}, h_u^{\theta_2^*}, g_z^{\theta_1^*} \cdot h_z^{\theta_2^*})$ in a two-dimensional subspace as in previous games, we choose $(C_r^*, C_u^*, C_z^*) \xleftarrow{R} \hat{\mathbb{G}}^3$ at random, and compute $D^* = M \cdot e(C_r^*, r_{ID^*})^{-1} \cdot e(C_u^*, u_{ID^*})^{-1} \cdot e(C_z^*, z_{ID^*})^{-1}$. Lemma 2 shows that, if the DLIN assumption holds in $\hat{G}$, this modification should not noticeably affect $A$'s view and we thus have $|\Pr[S_4] - \Pr[S_3]| \leq \textbf{Adv}^{DLIN}(B)$. In Game 4, we argue that $D^*$ perfectly hides $M$ and that, from $A$'s view, the challenge ciphertext $(C_r^*, C_u^*, C_z^*, D^*)$ is actually distributed as a tuple of uniformly random group elements in $G^4$ To see this, we first remark that $(C_r^*, C_u^*, C_z^*)$ can be expressed as $(C_r^*, C_u^*, C_z^*) = (g_r^{\theta_1^*}, h_u^{\theta_2^*}, g_z^{\theta_1^*} \cdot h_z^{\theta_2^* + \theta^*})$, for random exponents $\theta_1^*, \theta_2^*, \theta^* \xleftarrow{R} \mathbb{Z}_p$ such that $\theta \neq 0$ with overwhelming probability. From the previous mentioned equation $D^* = M \cdot e(C_r^*, r_{ID^*})^{-1} \cdot e(C_u^*, u_{ID^*})^{-1} \cdot e(C_z^*, z_{ID^*})^{-1}$, we see that $D^*$ can actually be written

$$D^* = M \cdot \prod_{j=1}^3 e(g_j^{\theta_1^*} \cdot h_j^{\theta_2^*}, H_j) \cdot e(h_z^{\theta^*}, z_{ID^*})^{-1}.$$

The message is thus blinded by a product of $\prod_{j=1}^3 e(g_j^{\theta_1^*} \cdot h_j^{\theta_2^*}, H_j)$, that is information-theoretically fixed, and $e(h_z^{\theta^*}, z_{ID^*})^{-1}$, which is completely independent of $A$'s view. Indeed, assuming that the event $\neg E$ of Game 2 occurs, we know that the vector $(H_1^*, H_2^*, H_3^*) = H(ID^*)$ is uniformly random in $\hat{G}^3$ and thus linearly independent of all the vectors $H(ID) = (H_1, H_2, H_3) \in \hat{G}^3$ for which $A$ makes private key queries of the form $(i^*, ID)$, during the game. It comes that these private key queries involving the target authority $i^*$ only provide $A$ with redundant information about the master secret key $msk_{i^*} = \{(\chi_{i^*, j}, \gamma_{i^*, j}, \delta_{i^*, j})\}_{j=1}^3$. More precisely, let us we consider what an unbounded adversary

$A$ can learn about $msk_i^*$, the master public key $mpk_t^* = \left\{\left(\hat{g}_{i^*,j}, \hat{h}_{i^*,j}\right)\right\}_{j=1}^3$ reveals 6 equations in 9 unknowns. Throughout all private key queries of the form $(i^*, ID)$, we claim that $A$ obtains at most two new independent linear equations. To see this, we first note that, since the private key $(Z_{ID}, r_{ID}, U_{ID})$ satisfies $e(g_z, z_{ID}).e(g_r, r_{ID}) = 1$, and $e(h_z, z_{ID}).e(h_u, u_{ID}) = 1$, $z_{ID}$ uniquely determines $(r_{ID}, u_{ID})$. Hence, in each private key, only $Z_{ID}$ can potentially carry non-trivial information about $msk_i^*$. Moreover, conditionally on event $\neg_\iota E$, all private key queries $(i^*, ID)$ only allow $A$ to obtain linearly homomorphic signatures on vectors living in $Span((\hat{f}, 1, \hat{g}), (1, \hat{h}, \hat{g}))$, which does not contain $(H_1^*, H_2^*, H_3^*) = H(ID^*)$. For the adversary, inferring $z_{ID^*} = \prod_{j=1}^3 H_j^{-\chi_{i^*,j}}$ would amount to completely determining $\left\{\left(\chi_{i^*,j}, \gamma_{i^*,j}, \delta_{i^*,j}\right)\right\}_{j=1}^3$. It comes that $z_{ID^*}$ is independent of $A$'s view, so that $D^*$, as computed in the equation

$$D^* = M.\prod_{j=1}^3 e(g_j^{\theta_1^*}.h_j^{\theta_2^*}, H_j).e\left(h_z^{\theta^*}, z_{ID^*}\right)^{-1},$$ appears as a random group element which is statistically independent of other ciphertext components.

**Game 5:** In this game, we modify again the treatment of random oracle queries. Here, at each hash query $H(ID)$, the challenger $B$ returns a completely random tuple $(H_1, H_2, H_3) \xleftarrow{R} \mathbb{G}^3$, instead of a vector in a two-dimensional subspace. The challenge ciphertext $\left(C_r^*, C_u^*, C_z^*, D^*\right)$ is generated as a random vector of $G^4$, as in Game 4. The same arguments as in the transition from Game 2 to Game 3 show that this change should remain unnoticed as long as the DLIN assumption holds in $\hat{G}$. We have $|Pr[S_5] - Pr[S_4]| \leq \textbf{\textit{Adv}}^{DLIN}(B)$.

**Game 6**: This game is identical to Game 5 with the difference that the challenger $B$ does not abort any longer when event E occurs. We thus have $Pr[S_6] = e(q + 1). Pr[S_5]$. It is easy to see that Game 6 corresponds to the actual attack game of Definition 2 when the challenger's random bit is d = 1. When counting probabilities throughout the sequence of games, we find that the adversary's advantage in Definition 2 can be expressed as $|Pr[S_0] - Pr[S_6]| \leq 3.e.(q + 1).\textbf{\textit{Adv}}^{DLIN}(B)$.

Then, the following Lemma (noted Lemma 1) can be stated : Under the DLIN assumption in $\hat{G}$, Game 3 is computationally indistinguishable from Game 2.

Indeed, the proof builds a simple DLIN distinguisher $B$ from an adversary $A$ that can tell apart Game 3 and Game 2. The reduction $B$ receives as input a pair $(\hat{g}, \hat{f}, \hat{h}, \hat{f}^r, \hat{h}^s, T)$ and has to decide whether $T = \hat{g}^{r+s}$ or $T \in_R G$. To do this, algorithm $B$ begins by generating *params,* and $\left\{(mpk_i, msk_i)\right\}_{i=1}^n$ in the same way as in the real scheme. Throughout the game, $B$ always answers authority corruption queries and private key queries faithfully. However, the treatment of random oracle queries $H(ID)$ depends on the value of the biased coin $\upsilon_{ID} \in \{0,1\}$. Namely, when $\upsilon_{ID} = 0$, $B$ uses the random self-reducibility of DLIN and builds many DLIN instances out of one.

- If $\upsilon_{ID} = 0$, $B$ chooses $\omega_{ID}, \mu_{ID}, \nu_{ID} \xleftarrow{R} \mathbb{Z}_p$, computes

$(H_1, H_2, H_3) = ((\hat{f}^r)^{\omega_{ID}}.\hat{f}^{\mu_{ID}}, (\hat{h}^s)^{\omega_{ID}}.\hat{h}^{\nu_{ID}}, T^{\omega_{ID}}.\hat{g}^{\mu_{ID}+\nu_{ID}})$

and programs the random oracle so as to have $H(ID) = (H_1, H_2, H_3) \in \hat{G}^3$. Observe that, if $T = \hat{g}^{r+s}$, the triple $(H_1, H_2, H_3)$ has the same distribution as in Game 3 as it can be written $(\hat{f}^{\alpha_{ID}}, \hat{h}^{\beta_{ID}}, \hat{g}^{\alpha+\beta_{ID}})$ where $a_{ID} = r\omega_{ID}+\mu_{ID}$ and $\beta_{ID} = s\omega_{ID}+\nu_{ID}$. In contrast, if $T \in_R G$, we can write $T = \hat{g}^{r+s+x}$ for some random $x \in_R Z_p$ which is non-zero with overwhelming probability. In this case, we have

$(H_1, H_2, H_3) = ((\hat{f}^{\alpha_{ID}}, \hat{h}^{\beta_{ID}}, \hat{g}^{\alpha_{ID}+\beta_{ID}+x\omega_{ID}})$, so that $(H_1, H_2, H_3) \in_R \hat{G}^3$.

- If $\upsilon_{ID} = 1$, $B$ draws $H_1, H_2, H_3 \xleftarrow{R} \widehat{\mathbb{G}}^3$ and defines $H(ID) = (H_1, H_2, H_3)$.

When $A$ terminates, $B$ output 1 if $A$ outputs 0, and 0 otherwise.

Clearly, *if* $T = \hat{g}^{r+s}$, A's view is exactly the same as in Game 3. In contrast, if $T$ is uniform in $\hat{G}$, $B$ is rather plaing the Game 2 with the adversary.

The following Lemma (noted Lemma 2) can be stated: under the DLIN assumption in $\hat{G}$, Game 4 is computationally indistinguishable from Game 3.

Indeed, the Lemma 2 can be proven as follows: towards a contradiction, let us assume that a PPT adversary $A$ can cause the challenger to output 1 with noticeably different probabilities in Game 4 and Game 3. Using $A$, we build a distinguisher $B$ as follows. Algorithm $B$ takes as input a DLIN instance $(\hat{g}, \hat{f}, \hat{h}, \hat{f}^{\theta_1}, \hat{h}^{\theta_2}, T)$ with the task of deciding $T = $

$\hat{g}^{\theta_1+\theta_2}$ or $T \in_R \hat{G}$. To this end, algorithm $B$ generates common public parameters being $params = (g_z, g_r, h_z, h_u)$ by setting $g_r = \psi(\hat{f})$, $h_u = \psi(\hat{h})$, as well as $g_z = \psi(\hat{f})^\mu \cdot \psi(\hat{g})^\omega$ and $h_z = \psi(\hat{h})^\nu \cdot \psi(\hat{g})^\omega$, for randomly chosen $\omega \xleftarrow{R} \mathbb{Z}_p$. The master key pairs $\{(mpk_i, msk_i)\}_{i=1}^n$ are generated in the same way as in the real scheme. During the game, $B$ answers all queries as in Game 3. During the challenge phase, it computes the challenge ciphertext by setting $(C_r^*, C_u^*, C_z^*, D^*)$ by setting $C_r^* = \psi(\hat{f}^{\theta_1}), C_u^* = \psi(\hat{h}^{\theta_2})$ and $C_z^* = \psi(\hat{f}^{\theta_1})^\mu \cdot \psi(\hat{h}^{\theta_2})^\nu \cdot \psi(T)^\omega$, and $D^* = M \cdot e(C_r^*, r_{ID^*})^{-1} \cdot e(C_u^*, u_{ID^*})^{-1} \cdot e(C_z^*, z_{ID^*})^{-1}$, where $(z_{ID}{}^*, r_{ID}{}^*, u_{ID}{}^*)$ is the private key generated using the master secret key $msk_{i^*}$ of the target authority $i^*$ for the identity $ID^*$. It is easy to see that, if $T = \hat{g}^{\theta_1+\theta_2}$ (resp. $T \in_R \hat{G}$), the challenge ciphertext is distributed as in Game 3 (resp. Game 4).

We remark that the scheme can also work without an efficiently computable isomorphism $\psi: \hat{G} \to G$. In this case, the security proof has to rely on the DLIN assumption in both G and $\hat{G}$, and not only $\hat{G}$. In order to secure the scheme against chosen-ciphertext attacks (where the adversary is granted access to a decryption oracle), several generic methods can be applied. For example, the Fujisaki-Okamoto transformation (described in the article "How to Enhance the Security of Public-Key Encryption at Minimum Cost" by E. Fujisaki et al., and published in the proceedings of the conference PKC 1999) immediately provides chosen-ciphertext security in the random oracle model and also preserves anonymity.

Figure 6 discloses a flowchart which depicts some steps performed by an electronic device during a common setup generation process, according to one embodiment of the disclosure.

More precisely, the common setup generation process, referenced 600, takes as input a security parameter $\lambda$.

In a step, referenced 601, the electronic device chooses or selects or obtains a bilinear group (G, $\hat{G}$, $G_T$) of prime order $p > 2^\lambda$, without an efficient isomorphism $\psi: \hat{G} \to G$.

In a step referenced 602, the electronic device obtains (or chooses) several random generators from the group G (in this embodiment, the number of random generators is equal to four): $g_z, g_r \xleftarrow{R} \mathbb{G}$.

In a step referenced 603, the electronic device chooses an identifier associated to a hash function $H: \{0,1\}^* \to \hat{G}^2$, that is modeled as a random oracle in the security analysis. The plaintext space is $M := G_T$, and the ciphertext space is $CT := G^2 \times G_T$.

The electronic device then provides the common public parameters $params$ to other electronic devices that either propagates it, or use it. The common public parameters $params$ is defined as being $params = ((G, \hat{G}, G_T), \psi, g_z, g_r, H, M, CT)$. It should be noted that the elements comprised in $params$ can be transmitted either one by one in a sequentially way, or they can also be transmitted in a unique packet, or also they can be transmitted in parallel.

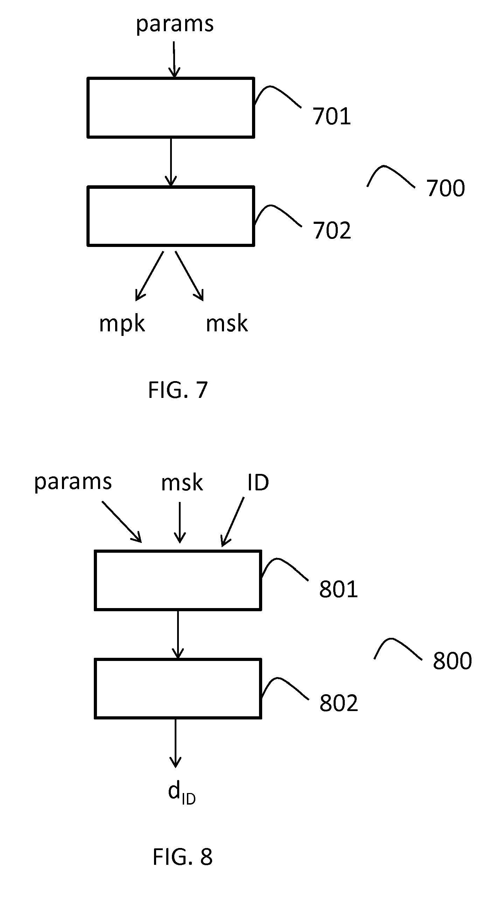

Figure 7 discloses a flowchart which depicts some steps performed by an electronic device during a master key generation process, according to one embodiment of the disclosure.

More precisely, the master key generation process, referenced 700, takes as input a common public parameters $params$ as the one obtained via the execution of the process 600.

In a step, referenced 701, the electronic device obtains 4 elements belonging to the group $Z_p$. Indeed, for $j = 1$ to 2, the electronic device obtains $\chi_j, \gamma_j \xleftarrow{R} \mathbb{Z}_p$. The master secret key is defined as $msk = \{(\chi_j, \gamma_j)\}_{j=1}^2$.

Then, in a step referenced 702, it determines $g_j = g_z^{\chi_j} \cdot g_r^{\gamma_j}$ for $j = 1$ to 2. The master public key associated to the master secret key corresponds to $mpk = \{g_j\}_{j=1}^2$.

Then, it outputs the master secret key $msk$, which is kept in a secure memory of an electronic device, and the master public key $mpk$, which is then transmitted to other electronic devices. As described below, the master secret key $msk$ is used only to perform a private key generation from a public identifier (or an identity). However, the master public key $mpk$ is used in all other processes (i.e. the key generation process, the encryption or ciphering process, and the decryption or deciphering process).

Figure 8 discloses a flowchart which depicts some steps performed by an electronic device during a private key generation process, according to one embodiment of the disclosure.

More precisely, the private key generation process, referenced 800, takes as input a common public parameters $params$ as the one obtained via the execution of the process 600, and the master secret key $msk$, as the one obtained via the execution of the process 700.

In a step referenced 801, the electronic device, that is a Trusted Authority (TA), determines from a given identity *ID,* a triple $(H_1, H_2) = H(ID) \in \hat{G}^2$. In another embodiment, the electronic device can obtain it from another electronic device.

Then, in a step referenced 802, the electronic device uses the components of the master secret key

$$msk = \left\{(\chi_j, \gamma_j)\right\}_{j=1}^{2}$$ in order to determine a private key associated to the given identity *ID* as follows:

$$d_{ID} = (z_{ID}, r_{ID}) = \left(\prod_{j=1}^{2} H_j^{-\chi_j}, \prod_{j=1}^{2} H_j^{-\gamma_j}\right).$$

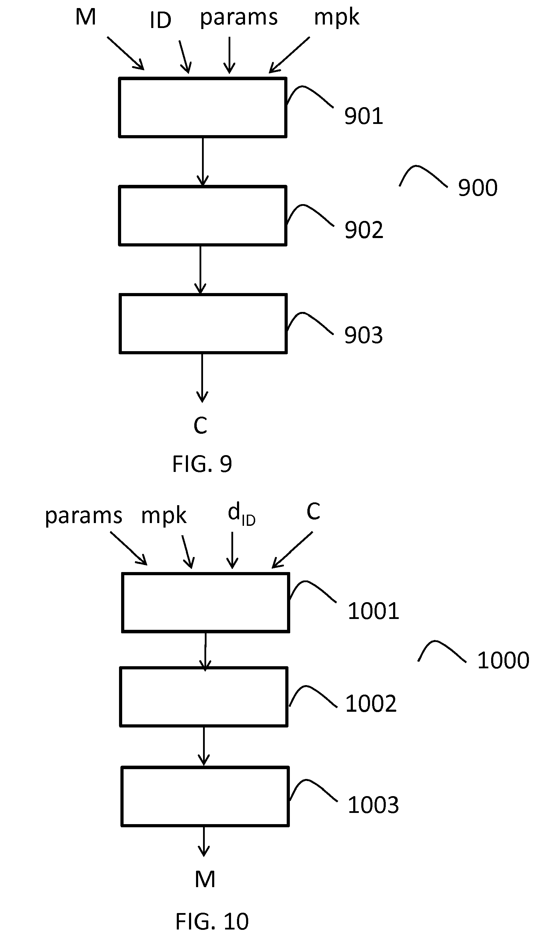

The electronic device provides the determined secret key $d_{ID}$ to the electronic device associated to the given identity *ID*, enabling it to perform ciphering as detailed in the Figure 9.

Figure 9 discloses a flowchart which depicts some steps performed by an electronic device during an execution of a method of ciphering, according to one embodiment of the disclosure.

More precisely, the method of ciphering, referenced 900, takes as input a common public parameters *params* as the one obtained via the execution of the process 600, the master public key *mpk*, as the one obtained via the execution of the process 700, a message *M* to encrypt/cipher, and an identity *ID* (corresponding to the one of the receiver that is to decipher the output of the method of ciphering 900).

The electronic device obtains, in a step referenced 901, a random element $\theta_1$ belonging to the group

$$\mathbb{Z}_p : \theta_1 \xleftarrow{R} \mathbb{Z}_p.$$

It also determines, in a step referenced 902, from the identity *ID* and the information related to the hash function *H* to be used, the value of $H(ID) = (H_1, H_2) \in \hat{G}^2$. Obviously, the order of execution of the steps 901 and 902 can be modified (and they can be done in parallel).

Then, in a step referenced 903, the electronic device performs several exponentiations and pairing computations in order to obtain:

- a triplet $(C_z, C_r) = (g_z^{\theta_1}, g_r^{\theta_1})$ that corresponds to a first part of the ciphertext *C*; and

- an element $D = M. \prod_{j=1}^{2} e\left(g_j^{\theta_1}, H_j\right)$ that corresponds to the second part of the ciphertext *C*.

Then, the ciphertext $C = (C_z, C_r, D)$ determined by the electronic device is transmitted.

Figure 10 discloses a flowchart which depicts some steps performed by an electronic device during an execution of a method of deciphering, according to one embodiment of the disclosure.

More precisely, the method of deciphering, referenced 1000, takes as input a common public parameters *params* as the one obtained via the execution of the process 600, the master public key *mpk*, as the one obtained via the execution of the process 700, a ciphertext *C* to be decrypted, and a private key $d_{ID}$ associated to the given identity, as the one obtained via the execution of the process 800.

The electronic device parses, in a step referenced 1001, the ciphertext *C* to be decrypted in the same way as an expected ciphertext obtained via the execution of the method 900. Therefore we have $C = (C_z, C_r, D)$.

It also parses, in a step referenced 1002, the private key $d_{ID}$ in the same way as an expected private key (or a decryption key) obtained via the execution of the method 800. Therefore we have $d_{ID} = (z_{ID}, r_{ID})$.

Then, the decrypted message *M* is obtained, in a step referenced 1003, by determining $D. e(C_z, Z_{ID}). e(C_r, r_{ID})$. Indeed, it is due to the fact that $M = D. e(C_z, Z_{ID}). e(C_r, r_{ID})$. The correctness can be verified by observing that for a decryption key $d_{ID} = (Z_{ID}, r_{ID})$, the following relation is satisfied: $e(g_z, z_{ID}). e(g_r, r_{ID}) = \prod_{j=1}^{2} e(g_j, H_j)^{-1}$. Then,

by raising this equation to the power $\theta_1$, we have $e\left(g_z^{\theta_1}, z_{ID}\right). e\left(g_r^{\theta_1}, r_{ID}\right) = \prod_{j=1}^{2} e(g_j^{\theta_1}, H_j)^{-1}$, which explains

why the decryption algorithm recovers the plaintext/message *M*.

The following result can be proved in the same way as in the first embodiment.

The following theorem can be stated: the scheme disclosed in Figures 6 to 10 provides *m* AI-ID-CPA security in the random oracle model if the SXDH (for *"Symmetric eXternal Diffie-Hellman"*) assumption holds in (G, $\hat{G}$). It means that the DDH assumption (for decisional Diffie-Hellman assumption; see for example the article entitled "The Decision Diffie-Hellman Problem" by D. Boneh, published in the proceedings of the Third Algorithmic Number Theory Symposium, in 1998) is both intractable in G and in $\hat{G}$.

Concretely, for any *m* -AI-ID-CPA adversary *A*, there exists a DDH distinguihers $B_1$ and $B_2$, in the groups G and $\hat{G}$, respectively, such that

$Adv^{m\text{-}AI\text{-}ID\text{-}CPA}(A) \leq e. (q + 1). (Adv^{DDH_1}(B_1) + 2. Adv^{DDH_2}(B_2)$, where *e* is the base for the natural logarithm and *q* is the maximal number of private key queries per authority.

The first advantage of the two schemes is to simultaneously provide: (i) semantic security and receiver anonymity in the sense of a strong definition, where ciphertexts are basically pseudorandom: they computationally hide both the receiver's identity and the master public key under which the message was encrypted; (ii) security proofs with tighter reductions (in the random oracle model) in the multi-authority setting: namely, the multiplicative gap between the adversary's advantage and the probability to break a decisional assumption does not depend on the number of authorities.

To our knowledge, the two constructions are the first IBE schemes that provably combine properties (i) and (ii).

In addition, the two schemes can easily be adapted to a setting with distributed authorities described in the article "Distributed Private-Key Generators for Identity-Based Cryptography" by A. Kate et al., published in the proceedings of the conference SCN 2010. Using techniques from threshold cryptography described in the article "Threshold Cryptosystems" by Y. Desmedt et al., and published in the proceedings of the conference CRYPRO 1989, the master secret key can be shared in a *t*-out-of-*n* fashion. In order to avoid storing the entire master secret (which is a very sensitive piece of information in IBE systems) in one location, each TA is split into *n* distinct sub-authorities, each of which holds a share of the master secret key, so that users have to receive partial identity-based private keys from at least t sub-authorities to obtain an effective decryption key. This was already possible in the Boneh-Franklin IBE, for example. However, in distributed variants of our systems, we can prove security in an adaptive corruption setting, where the adversary can dynamically choose which sub-authorities it wants to corrupt. In existing threshold variants of the Boneh-Franklin IBE, security can only be proved against a static adversary, that chooses which parties it wants to corrupt at the beginning of the attack, before seeing the master public key.

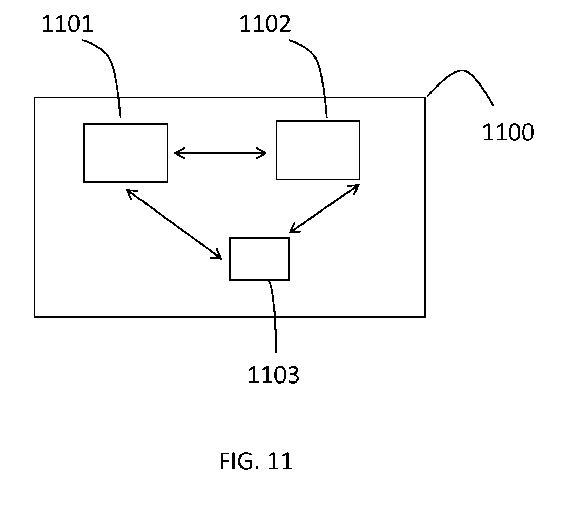

Figure 11 presents a device that can be used to perform one or several steps of methods disclosed in the present document.

Such device referenced 1100 comprises a computing unit (for example a CPU, for "*Central Processing Unit*"), referenced 1101, and one or several memory units (for example a RAM (for "*Random Access Memory*") block in which intermediate results can be stored temporarily during the execution of instructions a computer program, or a ROM block in which, among other things, computer programs are stored, or an EEPROM ("*Electrically-Erasable Programmable Read-Only Memory*") block, or a flash block) referenced 1102. Computer programs are made of instructions that can be executed by the computing unit. Such device 1100 can also comprise a dedicated unit, referenced 1103, constituting an input-output interface to allow the device 1100 to communicate with other devices. In particular, this dedicated unit 1103 can be connected with an antenna (in order to perform communication without contacts), or with serial ports (to carry communications "contact"). Let's remark that the arrows in Figure 11 mean that the linked unit can exchange data through buses for example together.

In an alternative embodiment, some or all of the steps of the method previously described, can be implemented in hardware in a programmable FPGA ("*Field Programmable Gate Array*") component or ASIC ("*Application-Specific Integrated Circuit*") component.

In an alternative embodiment, some or all of the steps of the method previously described, can be executed on an electronic device comprising memory units and processing units as the one disclosed in the Figure 11.

At last, to summarize, one embodiment of the disclosure proposes to use the linearly homomorphic signatures (as obtained through the technique described in the article "Linearly Homomorphic Structure-Preserving Signatures and their Applications. Linearly Homomorphic Structure-Preserving Signatures and their Applications", by B. Libert et al., and published in the proceedings of the conference CRYPTO 2013) as private keys in an IBE system (recall that any IBE implies a signature scheme because IBE private keys can always be used as signatures, as noted in the article "Identity-Based Encryption from the Weil Pairing", by D. Boneh et al., published in the proceedings of the conference CRYPTO 2001). In the IBE setting, we do not need the homomorphic property, which will be eliminated by hashing the identities before signing them in order to generate a private key for these identities. When proving the security of the scheme, we will take advantage of the fact that, in the security proofs of the linearly homomorphic signatures detailed in the article "Linearly Homomorphic Structure-Preserving Signatures and their Applications. Linearly Homomorphic Structure-Preserving Signatures and their Applications", by B. Libert et al., and published in the proceedings of the conference CRYPTO 2013, the reduction always knows the signer's private key. Since these signers' private keys will be used as authorities' master secret keys in the multi-authority setting, this will allow the reduction to correctly answer authority corruption queries made by the adversary. Since all master secret keys are known to the reduction at any time, the reduction can always consistently answer when the adversary adaptively decides to corrupt some authority.

As detailed previously, the idea of the security proof is as follows. The reduction "programs" the random oracle in such a way that, for any identity *ID* for which private keys are obtained by the adversary from the target authority *i\**, the resulting hash value $(H_1, H_2, H_3) \in \hat{G}^3$ always falls in a two dimensional subspace: by doing so, it can be guaranteed that the adversary only obtains redundant information about the master secret key $msk_{i^*} = \left\{ (\chi_{i^*,j}, \gamma_{i^*,j}, \delta_{i^*,j}) \right\}_{j=1}^{3}$. At the end of the game, $msk_{i^*}$ will remain information-theoretically undetermined after a polynomial number of private key queries involving the $i^*$-th authority. At the same time, for the specific identity $ID^*$ involved in the challenge phase, the hash value $(H_1{}^*, H_2{}^*, H_3{}^*) = H(ID^*)$ will fall outside the two dimensional subspace if the reduction is lucky. As a consequence the vector $(H_1{}^*, H_2{}^*, H_3{}^*)$ will be linearly independent of the vectors $(H_1, H_2, H_3) = H(ID)$ for which the adversary obtains private keys from the $i^*$-th authority. This implies that the adversary obtains no information about the private key $(z_{ID}{}^*, r_{ID}{}^*, u_{ID}{}^*)$ that the reduction can compute for itself for the target authority-identity pair $(i^*, ID^*)$. The reduction can thus use $(z_{ID^*}, r_{ID^*}, u_{ID^*})$ to generate the challenge ciphertext, which allows us to apply an information-theoretic argument to argue that the encrypted message is independent of the adversary's view at a certain step of the proof.

**Claims**

1. Method for ciphering digital data $M$ being an element of a group $\mathbb{G}_T$ , said group $\mathbb{G}_T$ being part of a bilinear group $(G, \hat{G}, G_T)$ of prime order $p$, the method being executed by an electronic device, and being **characterized in that** it comprises:

   - applying a hash function to an identity associated to a recipient electronic device, delivering $K + 1$ elements, each element belonging to said group $\hat{G}$, and $K$ being an integer value greater than or equal to one;
   - obtaining from common public parameters, shared by $n$ trusted authorities servers, $n$ being an integer value greater or equal to two, $2K$ generators of said group $\mathbb{G}$ ;
   - obtaining $K$ random element(s) belonging to $Z_p$;
   - determining $K + 1$ elements belonging to said group G via exponentiations of combinations of generators from said $2K$ generators, with exponents being said $K$ random element(s), said $K + 1$ elements being a first part of a ciphertext of said digital data $M$;
   - determining a product of said digital data $M$ with $K + 1$ elements belonging to said group $G_T$, each of said $K + 1$ elements belonging to said group $G_T$ being obtained via applying a pairing function on a combination of elements of a master public key associated to one of the $n$ trusted authorities, said $K$ random element(s) and output of said applying a hash function, delivering a second part of said ciphertext of said digital data $M$.

2. Method for ciphering according to claim 1, **characterized in that** said master public key comprises $K(K + 1)$ elements belonging to said group G, said $K(K + 1)$ elements being derived from said $2K$ generators.

3. Method for ciphering according to any claims 1 to 2, **characterized in that** said integer value $K$ is equal to one.

4. Method for ciphering according to claim 3, **characterized in that** said first part of said ciphertext of said digital data $M$ is $(C_z, C_r) = (g_z{}^\theta, g_r{}^\theta)$ with $g_z$ and $g_r$ being said 2 generators of said group G, and $\theta$ is said one random element belonging to $\mathbb{Z}_p$ .

5. Method for ciphering according to claim 4, **characterized in that** said second part of said ciphertext of said digital data $M$ is $M . \prod_{j=1}^{2} e\big(g_j{}^{\theta}, H_j\big)$, where $H_1$ and $H_2$ correspond to an output of applying a hash function, $g_1, g_2$ correspond to said master public key, defined as follows $g_j = g^{\chi_j} . g_r{}^{\gamma_j}$, with $j$ being equal to 1 or 2, $\chi_j$ and $\gamma_j$ being random elements belonging to $Z_p$ defining a master secret key, and $e$ corresponds to said pairing function.

6. Method for ciphering according to any claims 1 to 2, **characterized in that** said integer value $K$ is equal to two.

7. Method for ciphering according to claim 6, **characterized in that** said first part of said ciphertext of said digital data $M$ is $(C_r, C_u, C_z) = (g_r{}^{\theta_1}, h_u{}^{\theta_2}, g_z{}^{\theta_1} . h_z{}^{\theta_2})$ with $g_r, g_z, h_u$ and $h_z$ being said 4 generators of said group G, and $\theta_1, \theta_2$ are said two random elements belonging to $Z_p$.

8. Method for ciphering according to claim 7, **characterized in that** said second part of said ciphertext of said digital data $M$ is $M . \prod_{j=1}^{3} e\big(g_j{}^{\theta_1} . h_j{}^{\theta_2}, H_j\big)$, where $H_1, H_2$ and $H_3$ correspond to an output of applying a hash function,

$\left\{ (g_j, h_j) \right\}_{j=1}^{3}$ correspond to said master public key, defined as follows $g_j = g_z^{\chi_j} \cdot g_r^{\gamma_j}$, and $h_j = h_z^{\chi_j} . h_u^{\delta_j}$ with $j$ being equal to 1 or 2, $\chi_j$, $\gamma_j$ and $\delta_j$ being random elements belonging to $Z_p$ defining a master secret key, and e corresponds to said pairing function.

9. Method for deciphering a ciphertext, said ciphertext comprising a first part and a second part, the method for deciphering being executed on an electronic device, and being **characterized in that** it comprises:

- obtaining a bilinear group (G, $\hat{G}$, $G_T$) of prime order $p$;
- obtaining a private key associated to an identity , said private key being a linearly homomorphic signature of a hash of said identity, and said private key comprising $K + 1$ elements of said group G, with $K$ being an integer value greater than or equal to one;
- determining a product of said second part of said ciphertext with $K + 1$ elements belonging to said group $G_T$, each element of said $K + 1$ elements belonging to said group $G_T$ being obtained via applying a pairing function on a combination of elements of said first part of said ciphertext with elements of said private key associated to said identity, said determining delivering deciphered digital data $M$.

10. Method for deciphering according to claim 9, **characterized in that** each element of said private key associated to said identity is equal to $\prod_{j=1}^{K+1} H_j^{-u_j}$, where elements $H_1$, ..., $H_{K+1}$ being an output of a hash function applied to said identity, and elements $u_j$ being random elements belonging to $Z_p$.

11. Method for deciphering according to claim 10, **characterized in that** said integer value $K$ is equal to one.

12. Method for deciphering according to claim 11, **characterized in that** said private key is $d_{ID} = (z_{ID}, r_{ID}) = \left( \prod_{j=1}^{2} H_j^{-\chi_j}, \prod_{j=1}^{2} H_j^{-\gamma_j} \right)$, with $\chi_j$ and $\gamma_j$ being random elements belonging to $Z_p$.

13. Method for deciphering according to claim 12, **characterized in that** said determining a product corresponds to obtaining D. $e(C_Z, Z_{ID})$. $e(C_r, r_{ID})$ where the couple ($C_z$, $C_r$) is said first part of said ciphertext, and $D$ is said second part of said ciphertext.

14. Method for deciphering according to claim 10, **characterized in that** said integer value $K$ is equal to two.

15. Method for deciphering according to claim 14, **characterized in that** said private key is $d_{ID} = (z_{ID}, r_{ID}, u_{ID}) = \left( \prod_{j=1}^{3} H_j^{-\chi_j}, \prod_{j=1}^{3} H_j^{-\gamma_j}, \prod_{j=1}^{3} H_j^{-\delta_j} \right)$, with $\chi_j$, $\gamma_j$ and $\delta_j$ being random elements belonging to $Z_p$.

16. Method for deciphering according to claim 15, **characterized in that** said determining a product corresponds to obtaining $D.e(C_r, r_{ID})$. $e(C_u, u_{ID}).e(C_z, Z_{ID})$ where the triplet ($C_r$, $C_u$, $C_z$) is said first part of said ciphertext, and $D$ is said second part of said ciphertext.

17. A computer-readable and non-transient storage medium storing a computer program comprising a set of computer-executable instructions to implement a method for cryptographic computations, said instructions, when they are executed by a computer, being able to configure the computer to perform a method for ciphering of claims 1 to 8, and/or to perform a method for deciphering of claims 9 to 16.

18. Electronic device for ciphering digital data $M$ being an element of a group $G_T$, said group $G_T$ being part of a bilinear group (G, $\hat{G}$, $G_T$) of prime order $p$, the electronic device being **characterized in that** it comprises:

- means for applying a hash function to an identity associated to a recipient electronic device, delivering $K + 1$ elements, each element belonging to said group $\hat{G}$, and $K$ being an integer value greater than or equal to one;
- means for obtaining from common public parameters, shared by $n$ trusted authorities servers, $n$ being an integer value greater or equal to two, $2K$ generators of said group G;
- means for obtaining $K$ random element(s) belonging to $Z_p$;
- means for determining $K + 1$ elements belonging to said group G via exponentiations of combinations of generators from said $2K$ generators, with exponents being said $K$ random element(s), said $K$ + elements being a first part of a ciphertext of said digital data $M$;

- means for determining a product of said digital data $M$ with $K$ + 1 elements belonging to said group $G_T$, each of said $K$ + 1 elements belonging to said group $G_T$ being obtained via applying a pairing function on a combination of elements of a master public key associated to one of the $n$ trusted authorities, said $K$ random element(s) and output of said applying a hash function, delivering a second part of said ciphertext of said digital data $M$.

**19.** Electronic device for deciphering a ciphertext, said ciphertext comprising a first part and a second part, the electronic device being **characterized in that** it comprises:

- means for obtaining a bilinear group $(G, \hat{G}, G_T)$ of prime order $p$;
- means for obtaining a private key associated to an identity , said private key being a linearly homomorphic signature of a hash of said identity, and said private key comprising $K$ + 1 elements of said group G, with $K$ being an integer value greater than or equal to one;
- means for determining a product of said second part of said ciphertext with $K$ + elements belonging to said group $G_T$, each element of said $K$ + 1 elements belonging to said group $G_T$ being obtained via applying a pairing function on a combination of elements of said first part of said ciphertext with elements of said private key associated to said identity, said determining delivering deciphered digital data $M$.

$\lambda$

101

100

102

103

params

FIG. 1

params

201

200

202

msk    mpk

FIG. 2

params          msk          ID

301

300

302

d$_{ID}$

FIG. 3

M      ID   params    mpk

401

400

402

403

C

FIG. 4

params mpk d$_{ID}$ C

```
┌─────────────────┐
│                 │  ⌒ 501
└─────────────────┘
         │
         ▼                    ⌒ 500
┌─────────────────┐
│                 │  ⌒ 502
└─────────────────┘
         │
         ▼
┌─────────────────┐
│                 │  ⌒ 503
└─────────────────┘
         │
         ▼
         M
```

FIG. 5

$\lambda$

```
┌─────────────────┐
│                 │  ⌒ 601
└─────────────────┘
         │
         ▼                    ⌒ 600
┌─────────────────┐
│                 │  ⌒ 602
└─────────────────┘
         │
         ▼
┌─────────────────┐
│                 │  ⌒ 603
└─────────────────┘
         │
         ▼
      params
```

FIG. 6

params

701

700

702

mpk          msk

FIG. 7

params     msk     ID

801

800

802

$d_{ID}$

FIG. 8

M   ID   params   mpk

901

900

902

903

C

FIG. 9

params   mpk   $d_{ID}$   C

1001

1000

1002

1003

M

FIG. 10

1101     1102

1100

1103

FIG. 11

**EP 2 966 802 A1**

Europäisches Patentamt
European Patent Office
Office européen des brevets

# EUROPEAN SEARCH REPORT

Application Number

EP 14 30 6108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KENNETH G PATERSON ET AL: "Security and Anonymity of Identity-Based Encryption with Multiple Trusted Authorities", 1 September 2008 (2008-09-01), PAIRING-BASED CRYPTOGRAPHY - PAIRING 2008; [LECTURE NOTES IN COMPUTER SCIENCE], SPRINGER BERLIN HEIDELBERG, BERLIN, HEIDELBERG, PAGE(S) 354 - 375, XP019103357, ISBN: 978-3-540-85503-3 | 1,17,18 | INV.<br>H04L9/08<br>H04L9/30 |
| Y | * section 4.1; page 15 * | 2-8 | |
| Y,D | LIBERT BENOÎT ET AL LI XUE XUELIIOTATEE UQ EDU AU THE UNIVERSITY OF QUEENSLAND SCHOOL OF INFORMATION TECHNOLOGY AND ELECTRONIC ENG: "Linearly Homomorphic Structure-Preserving Signatures and Their Applications", 18 August 2013 (2013-08-18), LECTURE NOTES IN COMPUTER SCIENCE; [LECTURE NOTES IN COMPUTER SCIENCE], SPRINGER VERLAG, DE, PAGE(S) 289 - 307, XP047267915, ISSN: 0302-9743<br>* section 3.1; pages 7-8 * | 2-16,19 | |
| Y | BRENT WATERS ED - RONALD CRAMER: "Efficient Identity-Based Encryption Without Random Oracles", 22 May 2005 (2005-05-22), ADVANCES IN CRYPTOLOGY EUROCRYPT 2005, SPRINGER BERLIN HEIDELBERG, BERLIN, HEIDELBERG, PAGE(S) 114 - 127, XP047029464, ISBN: 978-3-540-25910-7<br>* section 7; page 10 * | 9-16,19 | |

**TECHNICAL FIELDS SEARCHED (IPC)**

H04L

-/--

The present search report has been drawn up for all claims

| Place of search | Date of completion of the search | Examiner |
|---|---|---|
| Munich | 22 January 2015 | Horbach, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

Europäisches
Patentamt

European
Patent Office

Office européen
des brevets

## EUROPEAN SEARCH REPORT

Application Number

EP 14 30 6108

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DAN BONEH ET AL: "Identity Based Encryption From the Weil Pairing", INTERNATIONAL ASSOCIATION FOR CRYPTOLOGIC RESEARCH,, vol. 20011030:124849, 30 October 2001 (2001-10-30), pages 1-27, XP061000208, [retrieved on 2001-10-30] * pages 8-12 * | 1-19 | |
| A | BONEH D ET AL: "SHORT SIGNATURES FROM THE WEIL PAIRING", JOURNAL OF CRYPTOLOGY, SPRINGER, NEW YORK, NY, US, vol. 17, no. 4, 21 September 2004 (2004-09-21), pages 297-319, XP001221154, ISSN: 0933-2790, DOI: 10.1007/S00145-004-0314-9 * section 4.2; pages 13-14 * | 1-19 | |

TECHNICAL FIELDS
SEARCHED      (IPC)

The present search report has been drawn up for all claims

| Place of search | Date of completion of the search | Examiner |
|---|---|---|
| Munich | 22 January 2015 | Horbach, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. PATERSON et al.** Security and Anonymity of Identity-Based Encryption with Multiple Trusted Authorities. *proceedings of the conference Pairing,* 2008
- **K.G. PATERSON et al.** Building Key-Private Public-Key Encryption Schemes. *proceedings of the conference ACISP,* 2009
- **BELLARE et al.** Public-Key Encryption in a Multi-user Setting: Security Proofs and Improvements. *proceedings of the conference Eurocrypt 00,* 2000
- **V. SHOUP.** *Sequences of Games: A Tool for Taming Complexity in Security Proofs*
- **H. SHACHAM.** *A Cramer-Shoup Encryption Scheme from the Linear Assumption and from Progressively Weaker Linear Variants*
- **K. PATERSON.** *Building Key-Private Public-Key Encryption Schemes*
- On the Exact Security of Full Domain Hash. *proceedings of the conference CRYPTO,* 2000
- **A. DENT.** A Note On Game-Hopping Proofs. *Cryptology ePrint Archive: Report,* 2006, 260
- **E. FUJISAKI et al.** How to Enhance the Security of Public-Key Encryption at Minimum Cost. *proceedings of the conference PKC,* 1999
- **D. BONEH.** The Decision Diffie-Hellman Problem. *proceedings of the Third Algorithmic Number Theory Symposium,* 1998
- **A. KATE et al.** Distributed Private-Key Generators for Identity-Based Cryptography. *proceedings of the conference SCN,* 2010
- **Y. DESMEDT et al.** Threshold Cryptosystems. *proceedings of the conference CRYPRO,* 1989
- **B. LIBERT et al.** Linearly Homomorphic Structure-Preserving Signatures and their Applications. Linearly Homomorphic Structure-Preserving Signatures and their Applications. *proceedings of the conference CRYPTO,* 2013
- **D. BONEH et al.** Identity-Based Encryption from the Weil Pairing. *proceedings of the conference CRYPTO,* 2001